# EUROPÄISCHE PATENTSCHRIFT

(11) **EP 4 160 072 B1**
(45) Veröffentlichungstag und Bekanntmachung des Hinweises auf die Patenterteilung: **19.03.2025**
(21) Anmeldenummer: 21200095.4
(22) Anmeldetag: 30.09.2021
(51) Int. Cl.: F16L 23/032, F16L 23/036, F16L 37/00, F16L 51/02, F16L 51/03

(54) **VERBINDUNGSSYSTEM ZUM VERBINDEN VON KOMPONENTEN IN EINEM LUFTFAHRZEUG**
CONNECTION SYSTEM FOR CONNECTION OF COMPONENTS IN AN AEROPLANE
SYSTÈME DE LIAISON PERMETTANT DE RELIER DES COMPOSANTS DANS UN AÉRONEF

(43) Veröffentlichungstag der Anmeldung: 05.04.2023
(73) Patentinhaber: Airbus Operations GmbH, 21129 Hamburg (DE)
(72) Erfinder: Hegenbart, Matthias, 21129 Hamburg (DE); Zahlen, Pierre, 21129 Hamburg (DE)
(74) Vertreter: LKGLOBAL Lorenz & Kopf Patentanwalt Attorney at Law PartG mbB

(56) Entgegenhaltungen:
- EP-B1- 2 058 574
- EP-B1- 2 907 929
- US-A- 2 960 354
- US-B2- 11 125 365

## Beschreibung

### Technisches Gebiet

Die vorliegende Beschreibung betrifft ein Verbindungssystem zum Verbinden von Komponenten in einem Luftfahrzeug, ein Struktur- und Ausstattungssystem sowie ein Fahrzeug.

### Technischer Hintergrund

Bei der Endmontage eines Luftfahrzeugs werden Strukturbauteile und Ausstattungskomponenten üblicherweise manuell gehandhabt und installiert. Beispielsweise werden in Unterflurbereichen Komponenten angeordnet, die mit elektrischen Leitungen oder Fluidleitungen mit einem elektrischen Netz oder Fluidquellen und -senken zu verbinden sind. Die Komponenten sind hierzu entsprechend mit Leitungen auszustatten, welche nach der Installation einer entsprechenden Baugruppe mit strukturfesten Leitungen zu verbinden sind. Aufgrund der Größe eines Luftfahrzeugs und der Komplexität der Ausstattung kann dies ein aufwendiger Prozess sein.

EP 2058574 B1 beschreibt laut Zusammenfassung eine Manschette für einen Endabschnitt eines axial offenen Metallrohres vorgegebenen Außendurchmessers, welche einen axial vorstehenden ringförmigen Rand (12, 52) zum Anlegen an den Endabschnitt von außen sowie eine ein axial wirkendes Andruckelement (20, 30) beherbergende Tasche (15, 55) zum dichtenden Unterfassen des Endabschnittes aufweist.

### Beschreibung

Es kann als Aufgabe betrachtet werden, ein System bereitzustellen, mit dem eine schnellere oder vereinfachte Verbindung von Komponenten in einem Luftfahrzeug durchführbar ist.

Diese Aufgabe wird gelöst durch den Gegenstand des unabhängigen Anspruchs 1. Weitere Ausführungsformen ergeben sich aus den abhängigen Ansprüchen sowie aus der folgenden Beschreibung.

Es wird ein Verbindungssystem zum Verbinden von Komponenten in einem Fahrzeug vorgeschlagen, aufweisend ein erstes längliches Element mit einer ersten Verbindungsfläche an einem ersten Ende, ein zweites längliches Element mit einer zweiten Verbindungsfläche an einem zweiten Ende, wobei das erste Element und das zweite Element jeweils mehrere Halteeinrichtungen aufweisen, die auf einer ringförmigen Verbindungslinie der betreffenden Verbindungsfläche verteilt sind, wobei die Verbindungsflächen und die Verbindungslinien des ersten Elements und des zweiten Elements kongruent sind, wobei die Verbindungsflächen und Halteeinrichtungen so ausgebildet sind, dass die Verbindungsflächen bündig in Flächenkontakt bringbar sind, wenn die Ausrichtungen des ersten länglichen Elements und des zweiten länglichen Elements zusammenfallen, und sich die dann einander gegenüberliegenden Halteeinrichtungen der in Flächenkontakt gebrachten Verbindungsflächen miteinander verbinden, wobei mindestens eines des ersten Elements und des zweiten Elements jeweils eine Längenausgleichskomponente aufweist, die an die jeweilige Verbindungsfläche angrenzt und dazu ausgebildet ist, eine Position der jeweiligen Verbindungsfläche in einer Längsrichtung des betreffenden Elements zu ändern, und wobei die Verbindungsflächen mindestens ein Paar von paarweise miteinander korrelierenden Schnittstellen zum Übertragen eines Fluids, von elektrischen oder optischen Signalen oder von elektrischem Strom aufweisen, die bei miteinander in Flächenkontakt gebrachten Verbindungsflächen in Verbindung bringbar sind.

Das erfindungsgemäße Verbindungssystem kann zum Verbinden einer in ein Fahrzeug zu installierenden Komponente mit einer darin angeordneten Medienleitung oder ähnlichem genutzt werden. Das erste längliche Element könnte strukturfest oder an einer bereits strukturfest angeordneten Komponente in dem Fahrzeug angeordnet sein. Das zweite längliche Element könnte an einer Ausstattungskomponente, einer zu befestigenden Baugruppe oder ähnlichem angeordnet sein. Wird die Baugruppe an dem gewünschten Installationsort angebracht, können die erste Verbindungsfläche und die zweite Verbindungsfläche in einen Flächenkontakt gebracht werden. Dadurch werden die beiden länglichen Elemente miteinander verbunden.

Das erste längliche Element und das zweite längliche Element könnten eine Medienleitung, beispielsweise eine Fluidleitung, eine elektrische Leitung oder ähnliches umfassen. Die länglichen Elemente sind nicht darauf beschränkt, lediglich ein einziges Medium zu leiten, sondern es könnten auch mehrere Medienleitungen als Strang vorliegen. Der Begriff "länglich" ist derart zu verstehen, dass zumindest im Bereich der Verbindungsflächen eine Anordnung mit einem weitgehend gleichförmigen Querschnitt vorgesehen ist, der sich entlang einer Achse, d.h. der Längsachse, erstreckt. Das jeweilige längliche Element endet in der betreffenden Verbindungsfläche, die an dem ersten Ende bzw. dem zweiten Ende angeordnet sind.

Die Verbindungsflächen weisen jeweils eine Verbindungslinie auf, die auf der Verbindungsfläche angeordnet ist. Der Begriff "ringförmig" ist dahingehend zu verstehen, dass die Verbindungslinie auf der Verbindungsfläche umlaufend gestaltet und in sich geschlossen ist. Sie ist eine gedachte Linie, auf der mehrere Halteeinrichtungen angeordnet sein können. Die Anzahl der Halteeinrichtungen kann von ihrem Wirkprinzip oder ihrer Ausführung abhängig gemacht werden. Es sind formschlüssige, kraftschlüssige und stoffschlüssige Halteeinrichtungen denkbar. Es könnten etwa Rastelemente vorgesehen sein, die zusammen eine formschlüssige Rastverbindung eingehen. Magnetische Halteeinrichtungen verursachen hingegen eine kraftschlüssige Verbindung. Löt- und Schweißverbindungen könnten vorgesehen sein, die durch eine zusätzliche Einwirkung von außen, etwa durch selektives Anlegen einer geeigneten elektrischen Schweißspannung, herstellbar sind.

Ziel der Verbindungsflächen mit den daran angeordneten Halteeinrichtungen ist, möglichst einfach und rasch eine Verbindung zwischen den beiden Elementen herzustellen, ohne eine direkte, manuelle Interaktion zu erfordern. Eine Baugruppe oder ähnliches könnte etwa eine Anordnung aus Strukturbauteilen mit daran angeordneten Leitungen oder elektrischen Verbrauchern umfassen, die strukturfest angebracht werden sollen. Verbindungsleitungen oder Komponenten könnten nach dem strukturfesten Anbringen jedoch recht schwierig zugänglich sein, insbesondere wenn die Baugruppe lediglich von einer Seite zugänglich ist, die von den Verbindungsleitungen und Komponenten abgewandt ist. Das Herstellen einer Verbindung einzelner Leitungen wäre demnach schwierig. Durch Verwendung des erfindungsgemäßen Verbindungssystems könnten sich die Verbindungsleitungen jedoch selbsttätig direkt beim strukturfesten Anbringen der Baugruppe mit daran angrenzenden Leitungen verbinden.

Um zu verhindern, dass die beiden länglichen Elemente mechanisch miteinander verspannt werden, insbesondere bei größeren Strukturen, variierenden Temperaturen und einhergehender thermischer Ausdehnungseffekte sind die Längenausgleichskomponenten vorgesehen. Diese erlauben eine gewisse Variabilität der Position der einzelnen Verbindungsflächen, verhindern dadurch eine Verspannung und erlauben eine verbesserte Verbindung.

Eine jeweilige Flächennormale der Verbindungsflächen könnte schräg zu einer Erstreckungsachse der jeweiligen Elemente stehen. Die Verbindungsflächen bilden dadurch eine Anschrägung der länglichen Elemente. Durch ihre Schrägstellung vergrößert sich der Flächeninhalt der Verbindungsflächen gegenüber senkrecht zu der Längsachse angeordneten Verbindungsflächen. Es ist denkbar, für die Schrägstellung einen Winkel von 30-60° zwischen der Flächennormalen und der Längsachse vorzusehen. Weiterhin wirken die Kräfte der Halteeinrichtungen dann nicht ausschließlich entlang der Längsachse, sondern können auch Querkräfte aufnehmen. Insgesamt kann sich dadurch die Qualität der Verbindung steigern lassen.

Es ist vorstellbar, dass die länglichen Elemente einen zumindest weitgehend zylindrischen Abschnitt mit einem Außendurchmesser aufweisen, wobei sich die jeweilige Verbindungsfläche an den jeweiligen zylindrischen Abschnitt anschließt, und wobei die Halteeinrichtungen außerhalb des Außendurchmessers angeordnet sind. Die Verbindungsflächen erstrecken sich folglich deutlich über den Außendurchmesser des zumindest weitgehend zylindrischen Abschnitts. Die Verbindungsflächen schaffen dadurch einen ringförmigen Streifen, der den Außendurchmesser umläuft und mit Halteeinrichtungen ausgestattet ist. Der gesamte Außendurchmesser des zumindest weitgehend zylindrischen Abschnitts kann für Medienleitungen verwendet werden. Es ist denkbar, dass in einer einfachen Form der zumindest weitgehend zylindrische Abschnitt als ein Rohrende ausgeführt ist, sodass die Verbindungsflächen eine Art Flansch darstellen, die die zwei Rohrabschnitte miteinander verbinden. Es ist denkbar, dass die Verbindungsflächen dann einen zentralen Ausschnitt aufweisen, die durch das betreffende Medium durchströmt werden.

Es ist vorstellbar, dass die Verbindungsflächen jeweils einen Ausschnitt aufweisen. Der jeweilige Ausschnitt kann insbesondere mittig in den Verbindungsflächen angeordnet sein. Die Verbindungsflächen bilden dadurch zumindest einen ringförmigen, flanschartigen Streifen aus. Kongruente Ausschnitte sind dabei bevorzugt, sodass ein ungehindertes Durchführen von elektrischen Leitungen oder ein ungehindertes Durchströmen mit einem Fluid möglich ist.

Die Halteeinrichtungen könnten Magnete, insbesondere Neodym-Magnete aufweisen. Die Magnete können so angeordnet sein, dass an der ersten Verbindungsfläche nach außen gerichtete Nordpole auf Südpole treffen, die auf der zweiten Verbindungsfläche nach außen gerichtet sind und umgekehrt. Die Magnete können jeweils eine kreissegmentförmige Struktur aufweisen oder ausbilden und/oder sich mit wechselnder Ausrichtung aneinanderreihen, sodass beim Annähern der Verbindungsflächen neben der reinen Anziehung auch unmittelbar eine korrekte Ausrichtung der Verbindungsflächen zueinander erfolgt. Neodym-Magnete eignen sich besonders gut für diesen Zweck, da sie eine sehr hohe Magnetkraft aufweisen und im industriellen Maßstab kostengünstig bereitstellbar sind.

Die Halteeinrichtungen könnten Klebeelemente, Klettelemente, Schnappverbinder, Schweißverbinder, Lötverbinder, Klemmverbinder, oder Vakuumverbinder aufweisen. Klebeelemente können etwa einen aushärtbaren Zwei-KomponentenKlebstoff umfassen. Bei der Installation einer vorangehend genannten Baugruppe oder dergleichen könnte ein solcher Klebstoff lokal auf die Verbindungsflächen aufgetragen werden, sodass nach dem Kontaktieren der Verbindungsflächen die Klebestellen zum festen Befestigen der beiden Verbindungsflächen aneinander aushärten. Klettelemente werden indes durch einen ausreichenden Flächenkontakt direkt miteinander formschlüssig verbunden und können später relativ leicht wieder voneinander getrennt werden. Schnappverbinder könnten einen vorgespannten Schnappmechanismus aufweisen, der beim Kontaktieren der Verbindungsflächen unmittelbar einschnappt. Die vorangehend erwähnten Löt- und Schweißverbinder könnten in Form von selektiv bereitstellbaren Löt- und Schweißverbindungen hergestellt werden. Dazu ist eine Wärmequelle oder eine entsprechende Stromquelle notwendig, die von außen herangeführt wird. Vakuumverbinder könnten schließlich durch Anlegen eines Vakuums aktiviert werden.

Das erste Element und das zweite Element könnten jeweils mindestens einen Rohrabschnitt aufweisen, wobei mindestens einer der Rohrabschnitte eine Dichtung aufweist, und wobei Rohrabschnitte so ausgeführt sind, dass sie bei in Flächenkontakt gebrachten Verbindungsflächen miteinander fluiddicht verbunden sind. Demnach könnte eine durchgehende Fluidleitung realisiert sein, wobei die zueinander gewandten Rohrabschnitte durch die entsprechende Dichtung miteinander fluiddicht verbindbar sind. Es ist zudem vorstellbar, dass sowohl das erste Element, als auch das zweite Element jeweils eine Dichtung aufweisen, wobei die beiden Dichtungen aneinander angepasst sind. Die Dichtungen können dabei derart ausgeführt sein, dass die beiden Rohrabschnitte automatisch zentriert werden. Eine der beiden Dichtungen könnte hierfür beispielsweise eine leichte Trichter- oder Kegelform aufweisen.

Das erste Element und das zweite Element könnte mindestens ein Paar elektrischer Verbinder aufweisen, die so angeordnet sind, dass sie bei in Flächenkontakt gebrachten Verbindungsflächen elektrisch miteinander verbunden sind. Die elektrischen Verbinder könnten jeweils einen einzelnen Pol einer elektrischen Leitung aufweisen. Es ist jedoch auch denkbar, komplexere Verbinder vorzusehen, die jeweils mehrpolig ausgeführt und beispielsweise magnetisch miteinander in Verbindung bringbar sind. Dadurch können praktisch beliebig komplexe Signalleitungen integriert werden.

Die elektrischen Verbinder könnten auf der jeweiligen Verbindungslinie angeordnet sein. Die elektrischen Verbinder könnten sich folglich zwischen den einzelnen Halteeinrichtungen befinden. Es wäre denkbar, bei komplexen Systemanordnungen viele elektrische Verbinder zu verwenden, die sich mit den Halteeinrichtungen abwechseln. Es ist dabei denkbar, dass eine solche Anzahl von Halteeinrichtungen verwendet wird, die zu einer symmetrischen Kraft auf die Verbindungsflächen führen.

An dieser Stelle wird darauf hingewiesen, dass die Halteeinrichtungen selbst die elektrischen Verbinder aufweisen können. Dadurch wird ein hohes Maß an Raumeffizienz bereitgestellt und eine kompakte Form der Verbindungsfläche ermöglicht.

Die elektrischen Verbinder könnten jeweils mit einer elektrischen Leitung verbunden sein, die außerhalb des jeweiligen länglichen Elements von der betreffenden Verbindungsfläche weg geführt sind. Die elektrische Leitung kann außen an dem länglichen Element befestigt und hieran entlang geführt werden. Die elektrische Leitung könnte aus mehreren Teilleitungen bestehen, die zu einem Strang miteinander verbunden werden. Die Teilleitungen können jeweils mit einem elektrischen Verbinder verbunden sein.

Weiterhin könnte die Längenausgleichskomponente ein elastisches Glied umfassen, das in das betreffende Element integriert ist und eine Formvariabilität des betreffenden Elements erlaubt. Die Formvariabilität kann zumindest in Längsrichtung eine Dehnung oder Stauchung ermöglichen. Es ist zudem denkbar, dass dadurch auch ein leichter Versatz zwischen den Verbindungsflächen bzw. den länglichen Elementen ausgleichbar ist.

Die Erfindung betrifft ferner ein Struktur- und Ausstattungssystem, aufweisend eine Baugruppe zur Installation an einer Struktur eines Fahrzeugs, sowie ein Verbindungssystem nach der vorhergehenden Beschreibung, wobei ein erster Verbinder strukturseitig anbringbar ist und ein zweiter Verbinder an der Baugruppe, wobei der zweite Verbinder mit einer an der Baugruppe angeordneten Komponente gekoppelt ist.

Weiterhin betrifft die Erfindung ein Fahrzeug, aufweisend eine Struktur und mindestens ein derartiges Struktur- und Ausstattungssystem.

Das Fahrzeug könnte ein Flugzeug sein. Das Struktur- und Ausstattungssystem könnte in einem Unterflurbereich des Flugzeugs angeordnet sein.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1: zeigt eine schematische Ansicht eines Struktur- und Ausstattungssystems in einem Flugzeug.
- Fig. 2: zeigt eine schematische Ansicht eines Verbindungssystems.
- Fig. 3a und 3b: zeigen einen Vorgang des Verbindens.
- Fig. 4: zeigt ein Detail einer Halteeinrichtung.
- Fig. 5a und 5b: zeigen elektrische Verbinder.
- Fig. 6: zeigt ein Flugzeug.

### Detaillierte Beschreibung von Ausführungsbeispielen

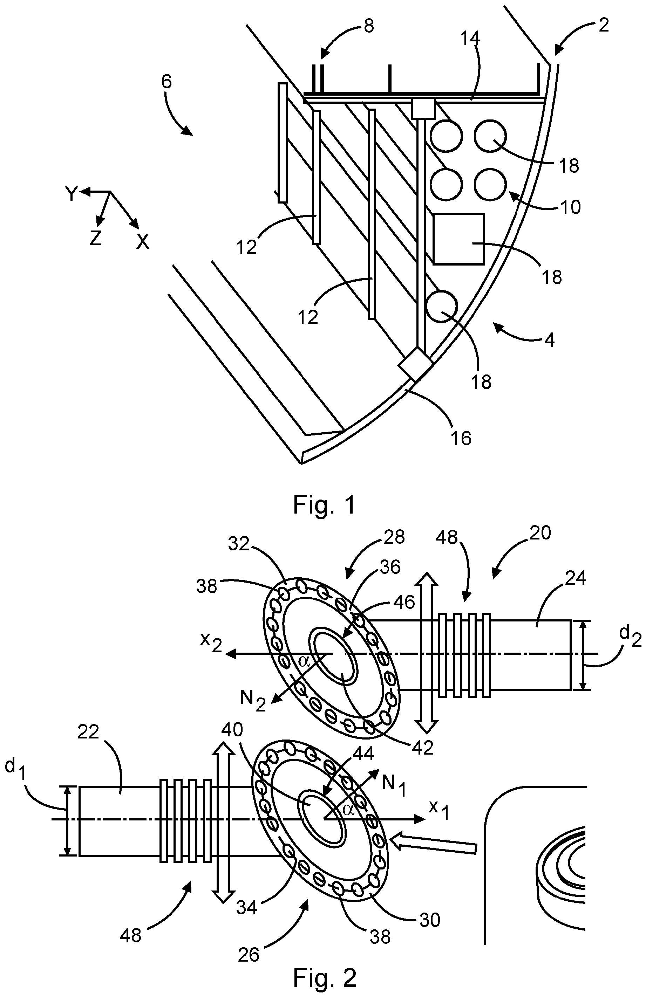

Fig. 1 zeigt ein Struktur- und Ausstattungssystem 2, das in einem Rumpf 4 eines Luftfahrzeugs installiert ist. Hier ist beispielhaft ein Unterflurbereich 6 gezeigt, der von einem Fußboden 8 begrenzt wird. Eine Baugruppe 10 ist unterhalb des Fußbodens 8 angebracht und kann Vertikalstützen 12 aufweisen, die mit Fußbodenträgern 14 und einem Spant 16 verbunden sind. Mehrere derartiger Baugruppen 10 können in einer Längsrichtung X aufeinanderfolgen und mehrere Komponenten 18 aufweisen. Diese können Rohrleitungen umfassen, elektrische Verbraucher oder ähnliches. Das Struktur- und Ausstattungssystem 2 kann ein Verbindungssystem 20 umfassen, das zum vereinfachten Verbinden von Komponenten 18 verwendbar ist. Das Verbindungssystem 20 wird weiter nachfolgend erläutert.

Fig. 2 zeigt das Verbindungssystem 20, das ein erstes längliches Element 22 und ein zweites längliches Element 24 aufweist. Das erste Element 22 besitzt ein erstes Ende 26. Das zweite Element 24 besitzt ein zweites Ende 28. An dem ersten Ende 26 ist eine erste Verbindungsfläche 30 angeordnet, während an dem zweiten Ende 28 eine zweite Verbindungsfläche 32 angeordnet ist. Beide Elemente 22 und 24 weisen jeweils eine Längserstreckungsachse X1 bzw. X2 auf.

Die Verbindungsflächen 30 und 32 besitzen jeweils eine Flächennormale N1 bzw. N2, die schräg zu der betreffenden Längsstreckungsachse X1 bzw. X2 steht, beispielsweise um einen Winkel α zwischen 30 und 60° zu der jeweiligen Längserstreckungsachse X1 bzw. X2.

Beide Verbindungsflächen 30 und 32 weisen jeweils eine Verbindungslinie 34 bzw. 36 als gedachte Linie auf, entlang der mehrere Halteeinrichtungen 38 verteilt sind. Die Verbindungslinien 34 bzw. 36 sind außerhalb eines Außendurchmessers d1 bzw. d2 angeordnet, sodass sie exemplarisch einen die Verbindungsfläche 30 bzw. 32 umlaufenden Streifen bilden. Durch Kontaktieren der beiden Verbindungsflächen 30 und 32 miteinander verbinden sich diese durch die Halteeinrichtungen 38, sodass folglich die Elemente 22 und 24 kombiniert werden.

In den Verbindungsflächen 30 bzw. 32 kann jeweils ein Ausschnitt 40 bzw. 42 als Schnittstelle angeordnet sein, durch den ein Fluid aus dem ersten Element 20 in das zweite Element 24 fließen kann. Zum Abdichten der beiden Elemente 22 und 24, die dann als Rohrabschnitte fungieren oder diese aufweisen, können Dichtungen 44 und 46 Verwendung finden. Statt einer reinen Fluidströmung ist auch denkbar, elektrische Leitungen durch die Elemente 22 und 24 zu führen. Alternativ sind jedoch andere Varianten denkbar, wie weiter nachfolgend ausgeführt.

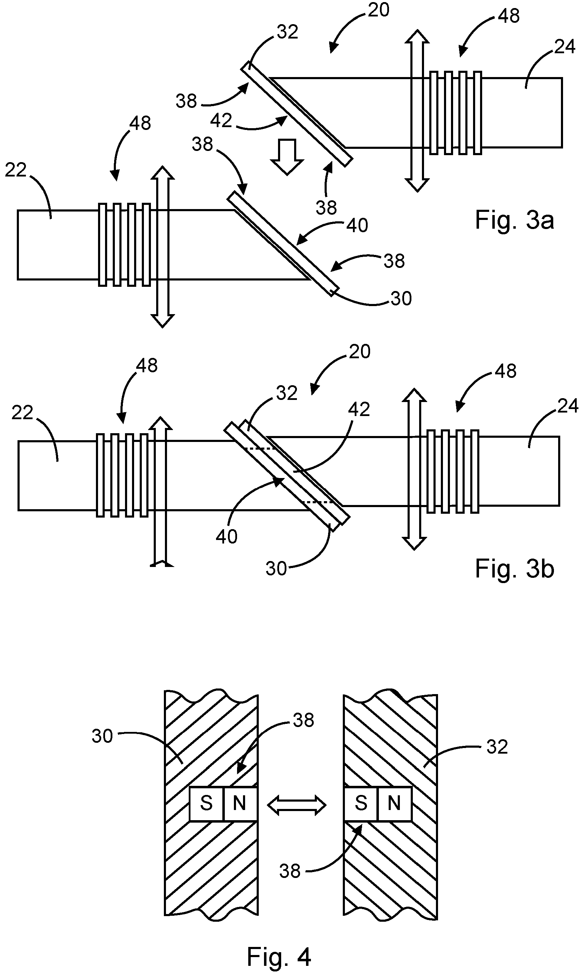

Zum Verbinden der beiden Elemente 22 und 24 ist der Vorgang, wie in Fig. 3a und 3b gezeigt, auszuführen. In Fig. 3a sind die beiden Elemente 22 und 24 voneinander beabstandet und die Verbindungsflächen 30 und 32 werden einander angenähert. In Fig. 3b sind die beiden Verbindungsflächen 30 und 32 miteinander verbunden, sodass die beiden Längselemente 22 und 24 ein durchgehendes Rohr ausbilden.

Um Verspannungen zwischen den Elementen 20 und 22 zu vermeiden, die aufgrund der starren Installation beider Elemente 22 und 24 an einem mit der Struktur verbundenen Bauteil resultieren könnten, sind Längenausgleichskomponenten 48 vorgesehen. Beispielsweise könnten diese als eine Art Balg ausgeführt sein, durch den die Elemente 22 und 24 gestaucht, gedehnt oder auf andere Art verformt werden können.

Die Halteeinrichtungen 38 könnten etwa Magnete aufweisen, sodass sich beide Verbindungsflächen 30 und 32 gegenseitig anziehen. Fig. 4 zeigt etwa zwei Halteeinrichtungen 38 in Form von umgekehrt zueinander ausgerichteten Magneten, die etwa als Neodym-Magnete ausgeführt sind. Durch ihre starke Anziehungskraft können die beiden Verbindungsflächen 30 und 32 sehr fest miteinander verbunden werden.

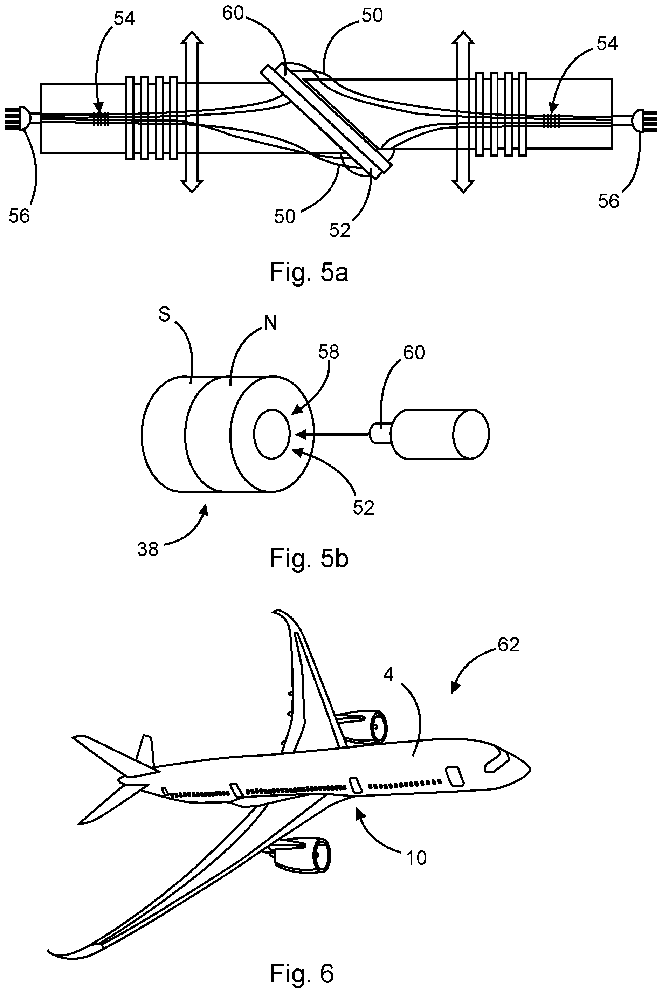

Fig. 5a zeigt eine weitere Modifikation, bei der mehrere elektrische Leitungen 50 vorgesehen sind, die mit elektrischen Verbindern 52 und 60 als Schnittstellen an den Verbindungsflächen 30 und 32 miteinander verbunden werden können. Mehrere Teilleitungen 50 sind hier zu einer Gesamtleitung 54 in Form eines Strangs gekoppelt und werden mit Anschlusssteckern 56 an betreffende Komponenten oder Leitungen angekoppelt. Die elektrischen Verbinder 52 und 60 können separat zwischen den einzelnen Halteeinrichtungen 38 angeordnet werden. Wie in Fig. 5b dargestellt, können jedoch auch Halteeinrichtungen 38 eine Bohrung 58 umfassen, in der ein elektrischer Verbinder 52 angeordnet ist. Ein entsprechender Kontaktstift 60 an einer gegenüberliegenden Halteeinrichtung 38 kann als elektrischer Verbinder in eine solche Bohrung 58 einschnappen. Es ist denkbar, dass die Kontaktstifte 60 federnd gelagert und beispielsweise teilweise kegelförmig sind, um ein einfaches Einführen in die Bohrung 58 zu ermöglichen. Es sind jedoch auch komplexere Verbinder möglich.

Schließlich zeigt Fig. 6 ein Flugzeug 62, der den Rumpf 4 aufweist, in dem ein Struktur- und Ausstattungssystem 10 angeordnet ist. Dort können mehrere Verbindungssysteme 20 eingesetzt sein.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 2: Struktur- und Ausstattungssystem
- 4: Rumpf
- 6: Unterflurbereich
- 8: Fußboden
- 10: Baugruppe
- 12: Vertikalstütze
- 14: Fußbodenträger
- 16: Spant
- 18: Komponente
- 20: Verbindungssystem
- 22: erstes längliches Element
- 24: zweites längliches Element
- 26: erstes Ende
- 28: zweites Ende
- 30: erste Verbindungsfläche
- 32: zweite Verbindungsfläche
- 34: erste Verbindungslinie
- 36: zweite Verbindungslinie
- 38: Halteeinrichtung
- 40: Ausschnitt / Schnittstelle
- 42: Ausschnitt / Schnittstelle
- 44: Dichtung
- 46: Dichtung
- 48: Längenausgleichskomponente
- 50: elektrische Leitung / Teilleitung
- 52: elektrischer Verbinder / Schnittstelle
- 54: Gesamtleitung
- 56: Anschlussstecker
- 58: Bohrung
- 60: elektrischer Verbinder / Kontaktstift / Schnittstelle
- 62: Flugzeug

- α: Winkel
- d1: erster Außendurchmesser
- d2: zweiter Außendurchmesser
- N1: erste Flächennormale
- N2: zweite Flächennormale
- X1: erste Längserstreckungsachse
- X2: zweite Längserstreckungsachse

## Patentansprüche

1. Verbindungssystem (20) zum Verbinden von Komponenten in einem Fahrzeug (62), aufweisend
ein erstes längliches Element (22) mit einer ersten Verbindungsfläche (30) an einem ersten Ende (26),
ein zweites längliches Element (24) mit einer zweiten Verbindungsfläche (32) an einem zweiten Ende (28),
wobei das erste Element (22) und das zweite Element (24) jeweils mehrere Halteeinrichtungen (38) aufweisen, die auf einer ringförmigen Verbindungslinie (34, 36) der betreffenden Verbindungsfläche (30, 32) verteilt sind,
wobei die Verbindungsflächen (30, 32) und die Verbindungslinien (34, 36) des ersten Elements (22) und des zweiten Elements (24) kongruent sind,
wobei die Verbindungsflächen (30, 32) und Halteeinrichtungen (38) so ausgebildet sind, dass die Verbindungsflächen (30, 32) bündig in Flächenkontakt bringbar sind, wenn die Ausrichtungen des ersten länglichen Elements (22) und des zweiten länglichen Elements (24) zusammenfallen, und sich die dann einander gegenüberliegenden Halteeinrichtungen (38) der in Flächenkontakt gebrachten Verbindungsflächen (30, 32) miteinander verbinden,
wobei mindestens eines des ersten Elements (22) und des zweiten Elements (24) eine Längenausgleichskomponente (48) aufweist, die an die jeweilige Verbindungsfläche (30, 32) angrenzt und dazu ausgebildet ist, eine Position der jeweiligen Verbindungsfläche (30, 32) in einer Längsrichtung des betreffenden Elements (22, 24) zu ändern,
wobei die Verbindungsflächen (30, 32) mindestens ein Paar von paarweise miteinander korrelierenden Schnittstellen (40, 42, 52, 60) zum Übertragen eines Fluids, von elektrischen oder optischen Signalen oder von elektrischem Strom aufweisen, die bei miteinander in Flächenkontakt gebrachten Verbindungsflächen (30, 32) in Verbindung bringbar sind, und
wobei eine jeweilige Flächennormale (N1, N2) der Verbindungsflächen (30, 32) schräg zu einer Erstreckungsachse (X1, X2) der jeweiligen Elemente (22, 24) steht.

2. Verbindungssystem (20) nach Anspruch 1,
wobei die länglichen Elemente (22, 24) einen zumindest weitgehend zylindrischen Abschnitt mit einem Außendurchmesser (d1, d2) aufweisen,
wobei sich die jeweilige Verbindungsfläche (30, 32) an den jeweiligen zylindrischen Abschnitt anschließt, und
wobei die Halteeinrichtungen (38) außerhalb des Außendurchmessers (d1, d2) angeordnet sind.

3. Verbindungssystem (20) nach einem der vorhergehenden Ansprüche,
wobei die Verbindungsflächen (30, 32) jeweils einen Ausschnitt (40, 42) als Schnittstellen aufweisen.

4. Verbindungssystem (20) nach einem der vorhergehenden Ansprüche,
wobei die Halteeinrichtungen (38) Magnete, insbesondere Neodym-Magnete aufweisen.

5. Verbindungssystem (20) nach einem der vorhergehenden Ansprüche,
wobei die Halteeinrichtungen (38) Klebeelemente, Klettelemente, Schnappverbinder, Schweißverbinder, Lötverbinder, Klemmverbinder, oder Vakuumverbinder aufweisen.

6. Verbindungssystem (20) nach einem der vorhergehenden Ansprüche,
wobei das erste Element (22) und das zweite Element (24) jeweils mindestens einen Rohrabschnitt aufweisen,
wobei mindestens einer der Rohrabschnitte eine Dichtung (44, 46) aufweist, und
wobei die Rohrabschnitte so ausgeführt sind, dass sie bei in Flächenkontakt gebrachten Verbindungsflächen (30, 32) miteinander fluiddicht verbunden sind.

7. Verbindungssystem (20) nach einem der vorhergehenden Ansprüche,
wobei das erste Element (22) und das zweite Element (24) mindestens ein Paar elektrischer Verbinder (52, 60) als Schnittstellen aufweisen, die so angeordnet sind, dass sie bei in Flächenkontakt gebrachten Verbindungsflächen (30, 32) elektrisch miteinander verbunden sind.

8. Verbindungssystem (20) nach Anspruch 7,
wobei die elektrischen Verbinder (52, 60) auf der jeweiligen Verbindungslinie (34, 36) angeordnet sind.

9. Verbindungssystem (20) nach Anspruch 7 oder 8,
wobei die elektrischen Verbinder (52, 60) jeweils mit einer elektrischen Leitung (50) verbunden sind, die außerhalb des jeweiligen länglichen Elements (22, 24) von der betreffenden Verbindungsfläche (30, 32) weg geführt sind.

10. Verbindungssystem (20) nach einem der vorhergehenden Ansprüche,
wobei die Längenausgleichskomponente (48) ein elastisches Glied umfasst, das in das betreffende Element (22, 24) integriert ist und eine Formvariabilität des betreffenden Elements (22, 24) erlaubt.

11. Struktur- und Ausstattungssystem (2), aufweisend eine Baugruppe (10) zur Installation an einer Struktur eines Fahrzeugs (62), sowie ein Verbindungssystem (20) nach einem der vorhergehenden Ansprüche, wobei das erste Element (22) strukturseitig anbringbar ist und das zweite Element (24) an der Baugruppe (10), wobei das zweite Element (24) mit einer an der Baugruppe (10) angeordneten Komponente (18) gekoppelt ist.

12. Fahrzeug (62), aufweisend eine Struktur und mindestens ein Struktur- und Ausstattungssystem (2) nach Anspruch 11.

13. Fahrzeug (62) nach Anspruch 12, wobei das Fahrzeug (62) ein Flugzeug (62) ist.

## Claims

1. Connecting system (20) for connecting components in a vehicle (62), comprising
a first elongate element (22) with a first connecting face (30) at a first end (26),
a second elongate element (24) with a second connecting face (32) at a second end (28),
wherein the first element (22) and the second element (24) each comprise several holding devices (38) which are distributed along an annular connecting line (34, 36) of the respective connecting face (30, 32),
wherein the connecting faces (30, 32) and the connecting lines (34, 36) of the first element (22) and second element (24) are congruent,
wherein the connecting faces (30, 32) and holding devices (38) are configured such that the connecting faces (30, 32) can be brought into a flush superficial contact when the orientations of the first elongate element (22) and second elongate element (24) coincide, and the then mutually opposite holding devices (38) of the connecting faces (30, 32) brought into superficial contact connect with one another,
wherein at least one of the first element (22) and second element (24) has a length adjustment component (48) which adjoins the respective connecting face (30, 32) and is configured to change a position of the respective connecting face (30, 32) in a longitudinal direction of the respective element (22, 24),
wherein the connecting faces (30, 32) comprise at least one pair of interfaces (40, 42, 52, 60) which correlate with one another in pairs for transfer of a fluid, electrical or optical signals or an electrical current, which interfaces can be brought into connection when the connecting faces (30, 32) are brought into superficial contact with one another, and
wherein a respective surface normal (N1, N2) of the connecting faces (30, 32) stands obliquely to an extent axis (X1, X2) of the respective elements (22, 24).

2. Connecting system (20) according to Claim 1,
wherein the elongate elements (22, 24) comprise an at least largely cylindrical portion with an outer diameter (d1, d2),
wherein the respective connecting face (30, 32) adjoins the respective cylindrical portion, and
wherein the holding devices (38) are arranged outside the outer diameter (d1, d2).

3. Connecting system (20) according to either of the preceding claims,
wherein the connecting faces (30, 32) each comprise a cutout (40, 42) as interfaces.

4. Connecting system (20) according to any of the preceding claims,
wherein the holding devices (38) comprise magnets, in particular neodymium magnets.

5. Connecting system (20) according to any of the preceding claims,
wherein the holding devices (38) comprise adhesive elements, rip tape elements, snap connectors, weld connectors, solder connectors, clamp connectors, or vacuum connectors.

6. Connecting system (20) according to any of the preceding claims,
wherein the first element (22) and the second element (24) each comprise at least one pipe portion,
wherein at least one of the pipe portions comprises a seal (44, 46), and
wherein the pipe portions are configured such that they are connected together fluid-tightly when the connecting faces (30, 32) are brought into superficial contact.

7. Connecting system (20) according to any of the preceding claims,
wherein the first element (22) and the second element (24) comprise at least one pair of electrical connectors (52, 60) as interfaces which are arranged such that they are electrically connected together when the connecting faces (30, 32) are brought into superficial contact.

8. Connecting system (20) according to Claim 7,
wherein the electrical connectors (52, 60) are arranged on the respective connecting line (34, 36).

9. Connecting system (20) according to Claim 7 or 8,
wherein the electrical connectors (52, 60) are each connected to an electrical line (50) which is guided away from the respective connecting face (30, 32) outside the respective elongate element (22, 24).

10. Connecting system (20) according to any of the preceding claims,
wherein the length adjustment component (48) comprises an elastic member which is integrated in the respective element (22, 24) and allows a shape variability of the respective element (22, 24).

11. Structural and equipment system (2), comprising an assembly (10) for installation on a structure of a vehicle (62), and a connecting system (20) according to any of the preceding claims, wherein the first element (22) can be arranged on the structure and the second element (24) on the assembly (10), wherein the second element (24) is coupled to a component (18) arranged on the assembly (10).

12. Vehicle (62), comprising a structure and at least one structural and equipment system (2) according to Claim 11.

13. Vehicle (62) according to Claim 12, wherein the vehicle (62) is an aircraft (62).

## Revendications

1. Système de connexion (20) permettant de connecter des composants dans un véhicule (62), présentant un premier élément (22) allongé comportant une première surface de connexion (30) à une première extrémité (26), un deuxième élément (24) allongé comportant une deuxième surface de connexion (32) à une deuxième extrémité (28), le premier élément (22) et le deuxième élément (24) présentant respectivement plusieurs dispositifs de retenue (38) qui sont distribués sur une ligne de connexion (34, 36) annulaire de la surface de connexion (30, 32) concernée,
les surfaces de connexion (30, 32) et les lignes de connexion (34, 36) du premier élément (22) et du deuxième élément (24) étant congruentes,
les surfaces de connexion (30, 32) et les dispositifs de retenue (38) étant réalisés de telle sorte que les surfaces de connexion (30, 32) peuvent être amenées en contact superficiel en affleurement, lorsque les orientations du premier élément (22) allongé et du deuxième élément (24) allongé coïncident, et que les dispositifs de retenue (38), alors mutuellement en regard, des surfaces de connexion (30, 32) amenées en contact superficiel sont connectés l'un à l'autre,
au moins l'un parmi le premier élément (22) et le deuxième élément (24) présentant un composant de compensation de longueur (48) qui est adjacent à la surface de connexion (30, 32) respective et est réalisé pour modifier une position de la surface de connexion (30, 32) respective dans une direction longitudinale de l'élément (22, 24) concerné,
les surfaces de connexion (30, 32) présentant au moins une paire d'interfaces (40, 42, 52, 60) corrélées les unes aux autres par paires pour le transfert d'un fluide, de signaux électriques ou optiques ou de courant électrique, lesquelles interfaces peuvent être amenées en connexion lorsque les surfaces de connexion (30, 32) sont amenées en contact superficiel l'une avec l'autre, et
une normale à la surface (N1, N2) respective des surfaces de connexion (30, 32) étant oblique par rapport à un axe d'étendue (X1, X2) des éléments (22, 24) respectifs.

2. Système de connexion (20) selon la revendication 1, les éléments (22, 24) allongés présentant une partie cylindrique au moins dans une large mesure dotée d'un diamètre extérieur (d1, d2),
la surface de connexion (30, 32) respective se raccordant à la partie cylindrique respective, et
les dispositifs de retenue (38) étant disposés à l'extérieur du diamètre extérieur (d1, d2).

3. Système de connexion (20) selon l'une des revendications précédentes,
les surfaces de connexion (30, 32) présentent respectivement une découpe (40, 42) en tant qu'interfaces.

4. Système de connexion (20) selon l'une des revendications précédentes,
les dispositifs de retenue (38) présentant des aimants, en particulier des aimants de néodyme.

5. Système de connexion (20) selon l'une des revendications précédentes,
les dispositifs de retenue (38) présentant des éléments adhésifs, des éléments auto-agrippants, des connecteurs encliquetables, des connecteurs soudés, des connecteurs brasés, des connecteurs à serrage ou des connecteurs à vide.

6. Système de connexion (20) selon l'une des revendications précédentes,
le premier élément (22) et le deuxième élément (24) présentant respectivement au moins une partie tubulaire, au moins l'une des parties tubulaires présentant un joint d'étanchéité (44, 46), et
les parties tubulaires étant configurées de telle sorte que celles-ci sont connectées l'une à l'autre de manière étanche aux fluides lorsque les surfaces de connexion (30, 32) sont amenées en contact superficiel.

7. Système de connexion (20) selon l'une des revendications précédentes,
le premier élément (22) et le deuxième élément (24) présentant au moins une paire de connecteurs (52, 60) électriques en tant qu'interfaces, lesquels sont disposés de telle sorte qu'ils sont connectés électriquement les uns aux autres lorsque les surfaces de connexion (30, 32) sont amenées en contact superficiel.

8. Système de connexion (20) selon la revendication 7, les connecteurs (52, 60) électriques étant disposés sur la ligne de connexion (34, 36) respective.

9. Système de connexion (20) selon la revendication 7 ou 8,
les connecteurs (52, 60) électriques étant connectés respectivement à une ligne (50) électrique, lesquelles sont guidées à l'écart de la surface de connexion (30, 32) concernée à l'extérieur de l'élément (22, 24) allongé respectif.

10. Système de connexion (20) selon l'une des revendications précédentes,
le composant de compensation de longueur (48) comprenant un organe élastique qui est intégré dans l'élément (22, 24) concerné et autorise une variabilité de forme de l'élément (22, 24) concerné.

11. Système structural et d'équipement (2), présentant un ensemble (10) pour l'installation sur une structure d'un véhicule (62), ainsi qu'un système de connexion (20) selon l'une des revendications précédentes, le premier élément (22) pouvant être installé côté structure et le deuxième élément (24) sur l'ensemble (10), le deuxième élément (24) étant accouplé à un composant (18) disposé sur l'ensemble (10).

12. Véhicule (62), présentant une structure et au moins un système structural et d'équipement (2) selon la revendication 11.

13. Véhicule (62) selon la revendication 12, le véhicule (62) étant un aéronef (62).
